Europäisches Patentamt

European Patent Office

Office européen des brevets

(19)

(11)   EP 1 453 042 A1

## EUROPEAN PATENT APPLICATION
published in accordance with Art. 158(3) EPC

(12)

(43) Date of publication:
    01.09.2004  Bulletin 2004/36

(51) Int Cl.⁷: G11B 7/0055

(21) Application number: 02803932.9

(86) International application number:
    PCT/JP2002/012297

(22) Date of filing: 26.11.2002

(87) International publication number:
    WO 2003/046899 (05.06.2003 Gazette 2003/23)

(84) Designated Contracting States:
    AT BE BG CH CY CZ DE DK EE ES FI FR GB GR
    IE IT LI LU MC NL PT SE SK TR
    Designated Extension States:
    AL LT LV MK RO SI

(30) Priority:  27.11.2001  JP 2001361558

(71) Applicant: TDK Corporation
    Chuo-ku, Tokyo 103-8272 (JP)

    • KOSUDA, Masanori c/o TDK Corporation
      Chuo-ku, Tokyo 103-8272 (JP)
    • INOUE, Hiroyasu c/o TDK Corporation
      Chuo-ku, Tokyo 103-8272 (JP)

(74) Representative:
    Strych, Werner Maximilian Josef, Dr. et al
    Hansmann & Vogeser,
    Patent- und Rechtsanwälte,
    Albert-Rosshaupter-Strasse 65
    81369 München (DE)

(72) Inventors:
    • YOSHINARI, Jiro c/o TDK Corporation
      Chuo-ku, Tokyo 103-8272 (JP)

(54)   **OPTICAL RECORDING MEDIUM AND OPTICAL RECORDING METHOD**

(57)   An optical recording medium is provided. The medium has a phase change recording layer wherein amorphous recorded marks are to be formed, and overwriting is conducted by irradiating a laser beam whose intensity is modulated to have at least recording power level and erasing power level. When the power level at which maximum erasability is achieved in DC erasing operation to crystallize the amorphous recorded marks by DC laser beam irradiation is designated an optimal erasing power level, difference between the DC erasability upon DC laser beam irradiation at a power level not less than said optimal erasing power level and not exceeding the recording power level in the overwriting and said maximum erasability is less than 10 dB in the medium of the present invention. A medium wherein such difference is less than 10 dB exhibits excellent overwrite shelf property.

FIG. 1

SAMPLE No. 1

EP 1 453 042 A1

## Description

TECHNICAL FIELD

This invention relates to a phase change optical recording medium and method for overwriting this medium.

BACKGROUND ART

Great attention is now paid to optical recording media capable of high density recording and erasing the once recorded information for rewriting. Among such rewritable optical recording media, phase change recording media are designed such that recording is performed by irradiating a laser beam to a recording layer to change its crystalline state and reading is performed by detecting the change of reflectivity of the recording layer associated with that state change. The phase change recording media are of greater interest because the drive unit used for their operation may have a simple optical system as compared with that used for magneto-optical recording media.

For the phase change recording layer, chalcogenide materials such as Ge-Sb-Te are often used because of a greater difference in reflectivity between the crystalline and amorphous states and a relatively high stability in the amorphous state.

When recorded marks are formed in a phase change optical recording medium, the recording layer is irradiated with a laser beam having a high power (recording power level) sufficient to heat the recording layer at or above its melting point. In the region where the laser beam of recording power is applied, the recording layer is melted and then rapidly cooled, forming a recorded mark in the amorphous state. To erase the recorded mark, the recording layer is irradiated with a laser beam having a relatively low power (erasing power) sufficient to heat the recording layer above its crystallization temperature, but below its melting point. The recorded mark to which the laser beam of erasing power is applied is heated above the crystallization temperature and then slowly cooled, resuming the crystalline state. Therefore, the phase change optical recording medium allows for overwriting simply by modulating the intensity of a single laser beam.

In the case of a phase change medium, it is important that the medium has an excellent overwrite shelf property, which is the overwrite property of the area of recorded marks after the storage. Various proposals have been made to improve the overwrite shelf property of such phase change medium.

For example, Japanese Patent Application Laid Open No. 11-167722 discloses reduction of the erasability decrease after the high temperature storage by overwriting at a linear velocity lower than the initial optimal recording linear velocity (optimal recording linear velocity before the high temperature storage). However, realization of a good recording properties at a linear velocity lower than the optimal recording linear velocity requires designing of a medium having an increased tolerance margin for the recording linear velocity. Furthermore, when an increase in the recording linear velocity to a relatively high level is required in order to increase the data transfer rate, the medium should be designed to have a considerably high optimal recording linear velocity.

Japanese Patent Application Laid Open Nos. 8-22644 and 8-263871 disclose that degradation of the overwrite shelf property can be reduced by constituting the phase change recording layer by using Ag, In, Te, and Sb for the main elements, and by adjusting Ag - Te/2 (at %) to -8 or less. However, such limitation in the composition of the recording layer results in a reduced design flexibility, and in particular, in the difficulty of enabling the recording at a high velocity or the recording at a high density.

In addition, Japanese Patent Application Laid Open Nos. 11-283277, 11-339314, 11-339315, and 11-339316 disclose improvement in the overwrite shelf property by providing a carbon-based layer, an oxide-based layer, a carbide-based layer, or a nitride-based layer in contact with the recording layer. However, the medium having such layer provided in contact with the recording layer is complicated in its structure, and hence production of such medium may invite an increased cost. It is to be noted that these patent documents point out change in the atomic arrangement and other states by the leaving amorphous recorded marks for a long time as well as reaction of the recording layer with the adjacent dielectric layer as the causes that might have adversely affected the jitter property by the overwrite shelf storage.

DISCLOSURE OF THE INVENTION

An object of the invention is to provide an optical recording medium having excellent overwrite shelf property. Another object is to provide a method for producing such optical recording medium.

These objects are achieved by the present invention as described in (1) to (3), below.

(1) An optical recording medium having a phase change recording layer wherein amorphous recorded marks are to be formed, wherein overwriting is conducted by irradiating a laser beam whose intensity is modulated to have at least recording power level and erasing power level; wherein

when the power level at which maximum erasability is achieved in DC erasing operation to crystallize the amorphous recorded marks by DC laser beam irradiation is designated an optimal erasing power level, difference between the DC erasability upon DC laser beam irradiation at a power level not less than said optimal erasing power level and not exceeding the recording power level in the overwriting and said maximum erasability is less than 10 dB.
(2) The optical recording medium of the above (1), wherein the recording layer is represented by an atomic ratio composition:

$$(Sb_xTe_{1-x})_{1-y}M_y \qquad (I)$$

wherein x and y are such that

0.5 ≤ x ≤ 0.9, and
0.01 ≤ y ≤ 0.2.

when M represents an element which is not Sb or Te.
(3) A method for overwriting the optical recording medium of the above (1) or (2), wherein

when the minimum value of power level at which erasability of at least 32 dB is achieved in the DC erasing operation is designated $Pe_{MIN}$, erasing power level in the overwriting is set at 1.0 to 2.5 folds of $Pe_{MIN}$.

BRIEF DESCRIPTION OF THE DRAWINGS

FIG. 1 is a graph showing dependence of the DC erasability on the erasing power in the optical recording disk sample according to the present invention.
FIG. 2 is a graph showing dependence of the DC erasability on the erasing power in a prior art optical recording disk sample.
FIG. 3 is a graph showing dependence of the CNR on the erasing power in the optical recording disk sample having a rapid cooling structure and in the optical recording disk sample having a slow cooling structure.
FIG. 4 is a graph showing dependence of the DC erasability on the erasing power in the optical recording disk sample having a rapid cooling structure.
FIG. 5 is a partial cross-sectional view of an optical recording medium according to an embodiment of the invention.
FIG. 6 is a partial cross-sectional view of another optical recording medium according to another embodiment of the invention.
FIG. 7 is a partial cross-sectional view of a further optical recording medium according to another embodiment of the invention.

BEST MODE FOR CARRYING OUT THE INVENTION

Erasure (crystallization) of the amorphous recorded marks in a phase change recording layer has been accomplished by the irradiation of a laser beam at the level of erasing power which is capable of heating the recorded marks to a temperature equal to or higher than crystallization temperature but lower than melting temperature. This crystallization process is a reaction that takes place in a solid phase. When the amorphous recorded marks have become stabilized after a long term storage or storage at a high temperature, transition into crystalline phase by a reaction in solid phase becomes difficult. Such difficulty in erasing the amorphous recorded marks that is found after a long term storage or storage at a high temperature, namely, the loss of overwrite shelf property is believed to result from stabilization of the amorphous recorded marks.

In the present invention, the amorphous recorded marks that have become stabilized and less susceptible for crystallization by the long term storage or high temperature storage are recrystallized by at least partly melting or by activating to a degree similar to such partial melting. In other words, the overwrite shelf property is improved by a relative increase in the level of the erasing power. More specifically, it has been found that, when the power level at which maximum erasability is achieved in DC erasing operation to crystallize the amorphous recorded marks by DC laser beam irradiation (the power level at which maximum DC erasability is achieved) is designated an optimal erasing power level, at least a part of the recorded marks can by recrystallized in molten or highly activated state in the erasure of the amorphous recorded marks by overwriting, and as a consequence, overwrite shelf property can be remarkably improved when the medium is designed such that the DC erasability upon DC laser beam irradiation at a power level not less than said optimal erasing power level and not exceeding the recording power level in the overwriting is not lower than the maximum erasability minus 10 dB.

In the overwriting with a laser beam modulated to have the level of the recording power and the level of the erasing power, setting of the level of the erasing power at a high level that allows the recording layer to become molten or highly activated has not been conducted.

In contrast, in the medium of the present invention, the DC erasability upon DC laser beam irradiation at a power level not less than said optimal erasing power level and not exceeding the recording power level in the overwriting should not be lower than the maximum erasability minus 10 dB. In order to realize the situation that the DC erasability is not remarkably reduced upon increase of the erasing power level, the recording layer may preferably have a composition containing Sb and Te as its main components.

In the overwriting, formation of the recorded mark by the irradiation of the laser beam (recording beam) at the level of recording power and the formation of the space by the irradiation of the laser beam (erasing beam) at the level of erasing power are alternately carried out. When the level of erasing power is raised to the level that the recording layer is melted, the phenomenon of self-erasing wherein the record marks that had been formed by the irradiation of the recording beam become recrystallized in the radiation of the erasing beam due to the heat conduction in the in-plane direction becomes prominent, rendering the recording substantially impossible. In order to alleviate such self-erasing phenomenon, the medium is preferably constituted to have a rapid cooling structure. When the medium has a rapid cooling structure, occurrence of the self-erasing is reduced since the heat is easily dissipated from the recording layer upon irradiation of the erasing beam.

The term "DC erasability" used in the present invention is the erasability after the operation when a single signal comprising the maximum length signal is recorded, and the recorded signal is erased by irradiating a DC laser beam. In this case, the maximum length signal is the maximum length signal in the modulation system used in overwriting the medium of the present invention. The DC erasability of the maximum length signal is employed in the present invention in consideration of the situation that the DC erasability is reduced with the increase in the signal length. If the maximum length signal is sufficiently erased, sufficient signal erasure can be expected for signals other than such maximum length signal.

Next, the present invention is described in detail.

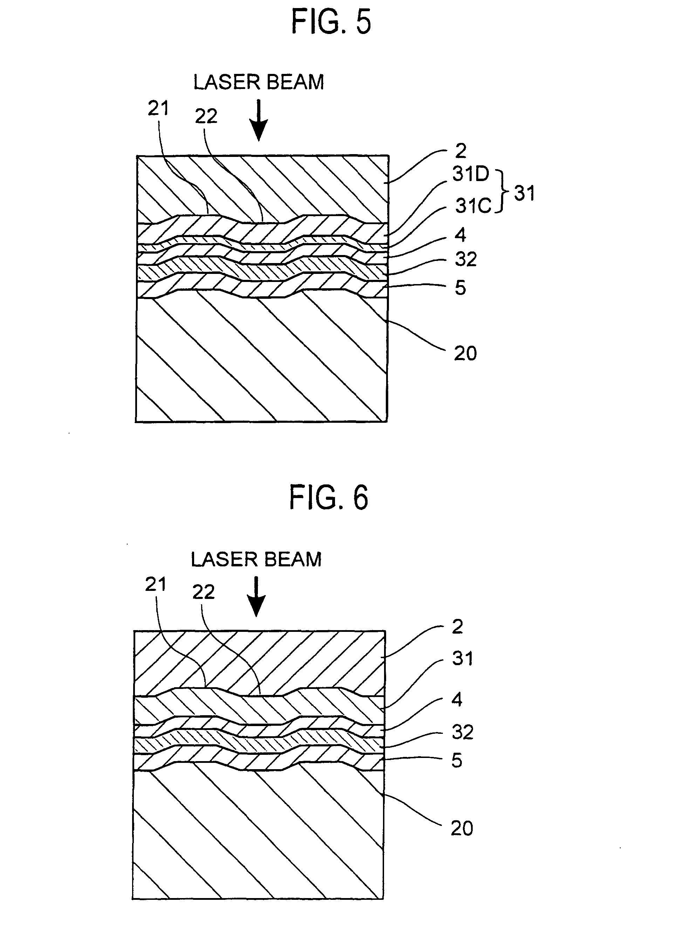

The embodiments of the optical recording mediums are shown in FIGS. 5 and 6. The optical recording mediums shown in FIGS. 5 and 6 are the medium comprising a supporting substrate 20, and a reflective layer 5, a second dielectric layer 32, a phase change recording layer 4, a first dielectric layer 31, and a light-transmitting substrate 2 formed on the supporting substrate 20 in this order. The first dielectric layer 31 of FIG. 5 comprises a laminate of a dielectric sublayer 31C on the side of the recording layer 4 and a dielectric sublayer 31D on the side of the dielectric sublayer 31C. The laser beam for recording and reading reaches the recording layer 4 through the light-transmitting substrate 2.

First, Sample No. 1 of the optical recording disk having the structure shown in the FIG. 6 was prepared by the procedure as described below. The supporting substrate 20 was in the form of a disk having a diameter of 120 mm and a thickness of 1.1 mm prepared by injection molding polycarbonate. The supporting substrate 20 had grooves simultaneously formed in the injection molding of the supporting substrate 20. The reflective layer 5 had a composition of $Al_{98.3}Cr_{1.7}$ (atomic ratio) and a thickness of 120 nm. The second dielectric layer 32 had a composition of ZnS (50 mol%) -$SiO_2$ (50 mol%), and a thickness of 20 nm. The recording layer 4 had a composition of (atomic ratio) of $In_{3.3}Ag_{5.1}Sb_{62.1}Te_{27}Ge_{2.5}$, and a thickness of 18 nm. The first dielectric layer 31 had a composition of ZnS (80 mol%) - $SiO_2$ (20 mol%), and a thickness of 80 nm. The transparent substrate 2 was formed by adhering a polycarbonate film having a thickness of 100 μm on the surface of the first dielectric layer 31.

Sample No. 2 of the optical recording disk having the structure shown in the FIG. 6 was prepared by the procedure as described below. The supporting substrate 20 was the same as Sample No. 1. The reflective layer 5 was the same as Sample No. 1 except that the thickness was 150 nm. The second dielectric layer 32 was the same as Sample No. 1. The recording layer 4 was the same as Sample No. 1 except that the composition was changed to $Ge_{20}Sb_{25}Te_{55}$ (atomic ratio). The first dielectric layer 31 was the same as Sample No. 1 except that the thickness was 110 nm. The transparent substrate 2 was the same as Sample No. 1.

Sample Nos. 1 and 2 were recorded with a single signal comprising 14T signal (maximum length signal in EFM modulation) after initializing (crystallizing) the recording layer 4. In the recording of the 14T single signal, the overwriting operation was conducted by modulating the intensity of the laser beam to have the level of recording power and the level of erasing power. The level of the recording power Pw was set at the optimal recording power. The optimal recording power was determined by the procedure as described below. Dependence of the random jitter on the level of the recording power was measured by setting the erasing power at Pe and fixing the power ratio Pe/Pw at 0.4, 0.5, or 0.6, and determining the level of the recording power exhibiting the minimum jitter for each power ratio. Of the levels of the recording power exhibiting the minimum jitter in each power ratio, the level of the recording power exhibiting the minimum jitter was designated the optimal recording power level. The thus determined level of the optimal recording power was 13 mW for both Sample Nos. 1 and 2.

It is to be noted that random jitter is the clock jitter of a random signal based on the employed signal modulation system. A random signal is the signal wherein signals of every length ranging from the minimum length signal to the maximum length signal in the employed modulation system are arranged in a random order. The clock jitter can be calculated by measuring the read-out signal with a time interval analyzer to determine the "signal fluctuation ($\sigma$)", and calculating

$$\sigma/Tw \ (\%)$$

wherein Tw is the window width.

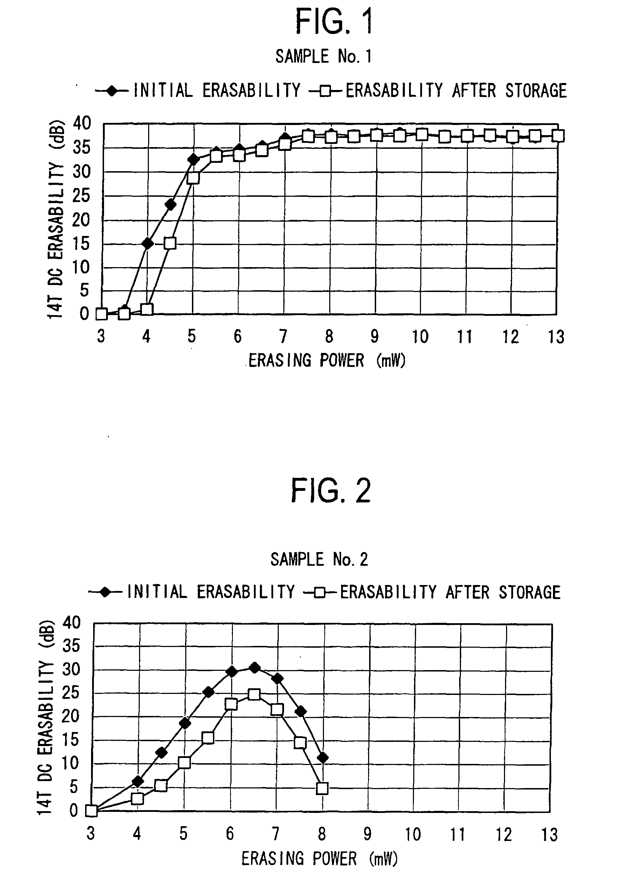

Next, signal recording area of each sample was irradiated with a DC laser beam having of the power level (erasing power) shown respectively in FIGS. 1 and 2 to measure the DC erasability of 14T signal, and this DC erasability was designated the initial erasability. Next, the DC erasability was measured in a similar manner after storing for 50 hours under the conditions of 80C° and relative humidity of 85%, and this DC erasability was designated the erasability after the storage.

The results are shown in FIGS. 1 and 2, respectively.

In FIG. 2 showing the results for Sample No. 2, initial erasability was at its maximum at the erasing power level of 6.5 mW, and the initial erasability decreased with further in crease in the erasing power. The erasability at the erasing power level of 8 mW is a value more than 15 dB less than the maximum erasability. It is estimated that, at the erasing power level resulting in the maximum erasability, the amorphous recorded marks are crystallized in the solid phase, and when the erasing power level is increased, the amorphous recorded marks become molten, and at least some of the molten recorded marks become amorphous again.

FIG. 2 also reveal that the erasability after the storage is reduced to the level of less than 26 dB at the erasing power level of 6.5 mW at which the initial erasability is at its maximum, indicating the poor overwrite shelf property.

In contrast, in the case of FIG. 1 showing the results for Sample No. 1, the erasing power level resulting in the maximum initial erasability is 9.5 mW, and the DC erasability does not significantly become reduced until the power level reaches the recording power level of 13 mW. It should also be noted that the erasability after the storage is substantially the same as the initial erasability in the range of the erasing power exceeding 5 mW. As described above, Sample No. 1 has a remarkably improved overwrite shelf property.

The inventors of the present invention repeated similar experiments for the mediums with various constitutions, and found that a sufficient decrease in the erasability after a long term storage or a high temperature storage can be realized when the medium is the one wherein the decrease in the DC erasability upon erasing operation with a DC laser beam at a power level not less than the erasing power level at which maximum erasability is achieved (optimal erasing power level) and not exceeding the recording power level compared to the maximum erasability as described above is less than 10 dB, and preferably less than 6 dB. In other words, the inventors found that the overwrite shelf property can be determined by the dependence of the DC erasability on the erasing power.

In the present invention, the optimal erasing power level may be less than the recording power level as shown in FIG. 1, or alternatively, the optimal erasing power level may coincide with the recording power level.

The "recording power level" in "the DC laser beam at a power level not less than the optimal erasing power level and not exceeding the recording power level" is the recording power level actually used in the overwriting, and the optimal recording power level determined by the procedure as described above may be used in the actual overwriting.

The medium exhibiting a sufficiently high erasability when irradiated with the DC laser beam at a power level not less than the optimal erasing power level and not exceeding the recording power level is a medium wherein amorphous recorded marks can be crystallized when the medium is irradiated with a laser beam at the power level high enough to melt or highly activate at least a part of the amorphous recorded marks. Accordingly, in such medium, even when the amorphous recorded marks have been stabilized after the high temperature storage, an erasability equivalent with the initial erasability can be realized by increasing the erasing power level to a relatively high level, and the favorable overwrite shelf property is thereby achieved.

The minimum value of the power level gaining the erasability of at least 32 dB in the graph showing dependence of the DC erasability on the erasing power as shown in FIG. 1 is designated in the specification of present invention a $Pe_{MIN}$. $Pe_{MIN}$ in FIG. 1 is 4.9 mW. The inventors of the present invention repeated similar experiments for the mediums with various constitutions, and found that a favorable overwrite shelf property is realized when the medium within the scope of the present invention is overwritten with a laser beam whose intensity is modulated to have the recording power level and the erasing power level, and when the erasing power is selected to be at least 1.0 fold, preferably at least 1.2 folds, and more preferably at least 1.5 folds of the $Pe_{MIN}$. Accordingly, the erasing power of such range should be selected in the overwriting. In FIG. 1, the erasability after the storage is at least 26 dB when the erasing power is $Pe_{MIN}$, and the difference between the initial erasability and the erasability after the storage is small. When the erasability is at least 26 dB, this erasability can be evaluated as an erasure of sufficient level. It is to be noted that, in Sample No. 1, a trace of melting was found in some part of the area that had been irradiated with the DC laser beam at the erasing power level higher than 6 mW, and the trace of melting was found in substantially entire area that had been irradiated with the DC laser beam at the erasing power level of 7.5 mW. The trace of melting was confirmed by the presence of coarse crystal grains.

The erasing power level in the overwriting, however, is preferably up to 2.5 folds, and in particular, up to 2.2 folds of the $Pe_{MIN}$, since use of an excessively high erasing power level in the overwriting may result in the difficulty of forming the recorded mark and increase of the influence of the self-erasing.

In the determination of the optimal erasing power and the $Pe_{MIN}$, power level of the DC laser beam is preferably varied at an increment of 0.5 mW or less. Exact determination of the optimal erasing power and the $Pe_{MIN}$ may not be possible when an excessively large increment is used for the power level.

In the experiments using Sample Nos. 1 and 2, the laser beam used in the recording and reading had a wavelength $\lambda$ of 634 nm, and the laser beam irradiation system used had a numerical aperture NA of 0.6.

Next, Sample No. 3 of the optical recording disk having the structure shown in the FIG. 5 was prepared by the procedure as described below. The reflective layer 5 had a composition of $Ag_{98}Pd_1Cu_1$ (atomic ratio) and a thickness of 100 nm. The second dielectric layer 32 had a composition of $Al_2O_3$ and a thickness of 20 nm. The recording layer 4 had a composition of

$$(Sb_xTe_{1-x})_{1-y}M_y \qquad (I)$$

wherein

M is In or Ge,
In:Ge is 1:5,
x is 0.78, and
y is 0.06, and a thickness of 12 nm. The dielectric sublayer 31C had a composition of ZnS (80 mol%) - $SiO_2$ (20 mol%), and a thickness of 40 nm. The dielectric sublayer 31D had a composition of $Al_2O_3$, and a thickness of 30 nm. The transparent substrate 2 was the same as the one in Sample No. 1.

Sample No. 4 was also produced by repeating the production procedure of Sample No. 3 except that the first dielectric layer 31 was a layer having a composition of ZnS (80 mol%) - $SiO_2$ (20 mol%) and a thickness of 135 nm. The Sample No. 4 has a heat dissipation inferior to Sample No. 3. Accordingly, Sample No. 3 has a rapid cooling structure, in terms of the cooling speed of the recording layer 4 after the laser beam irradiation while Sample No. 4 has a slow cooling structure.

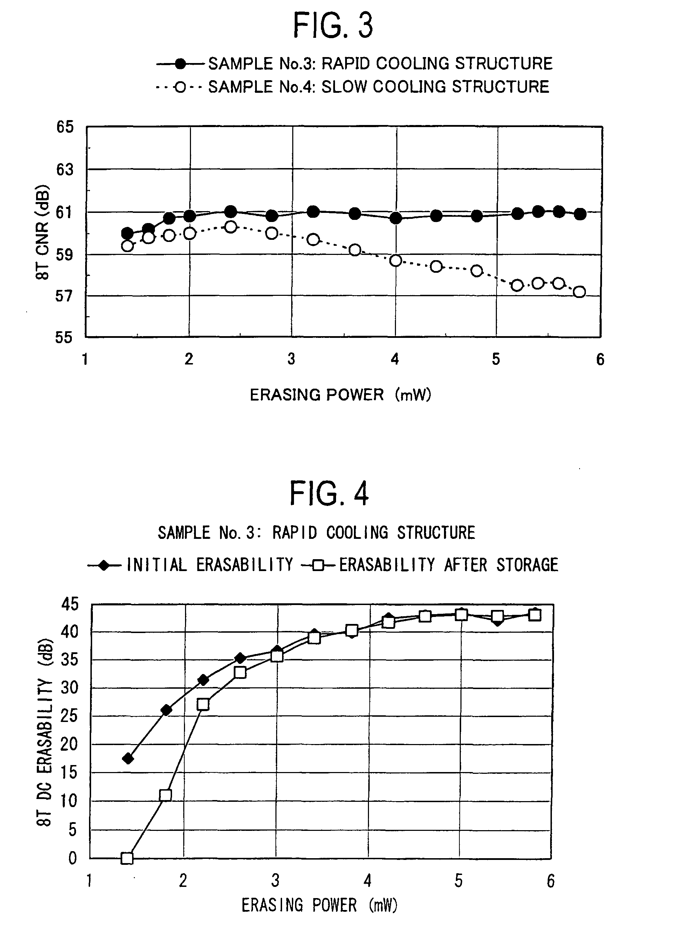

Sample No. 3 (rapid cooling structure) and Sample No.4 (slow cooling structure) were recorded with a single signal comprising 8T signal (the maximum length signal in the 1-7 modulated signal), and their CNR (carrier to noise ratio) was measured after the recording. In the recording of the 8T single signal, the overwriting operation was conducted so that the laser beam had the recording power level and the erasing power level. The recording power was 6 mW and the erasing power was the value shown in x axis of FIG. 3. The results are shown in FIG. 3. It is to be noted that the recording power level is the optimal recording power level determined by the procedure as described above.

FIG. 3 demonstrates that increase in the erasing power level is associated with the decrease of CNR in the case of the sample having a slow cooling structure.

In the experiments using Sample Nos. 3 and 4, the laser beam used in the recording and reading had a wavelength $\lambda$ of 405 nm, the laser beam irradiation system used had a numerical aperture NA of 0.85, and $\lambda$/NA was 476 nm. Compared to the conditions used in Sample Nos. 1 and 2 (wherein $\lambda$/NA is 1057 nm), the conditions used in Sample Nos. 3 and 4 employs a shorter laser wavelength and a larger numerical aperture. Accordingly, the diameter of the spot which is in proportion to $\lambda$/NA is smaller in these samples. This in turn results in the increased energy density of the beam spot and difficulty in the cooling of the recording layer in the overwriting. Accordingly, it is believed that the CNR in Sample No. 4 having a slow cooling structure was reduced by the self-erasing phenomenon.

In the case of Sample No. 1 wherein both the reflective layer 5 and the second dielectric layer 32 have a thermal conductivity lower than Sample No. 4, it does not suffer from the reduced CNR with the increase in the erasing power level although the structure of Sample No. 1 is a slow cooling structure compared to Sample No. 4. It is estimated that this is due to the reduced occurrence of the self-erasing phenomenon due to the larger $\lambda$/NA.

The results as described above reveal that, in the case of a medium having a small $\lambda$/NA, the medium should be designed to have a rapid cooling structure depending on the $\lambda$/NA in order to at least partly melt or highly activate the amorphous recorded marks by using the erasing beam having a high power in the overwriting and simultaneously avoid the decrease of the CNR.

Sample No. 3 (rapid cooling structure) was evaluated for its initial DC erasability and DC erasability after the storage as in the case of Sample No. 1 except that the recording signal used was 8T signal (the maximum length signal in the 1-7 modulated signal). The results are shown in FIG. 4. Both the initial DC erasability and the DC erasability after the storage in FIG. 4 showed the profile basically similar to that of FIG. 1. The $Pe_{MIN}$ in FIG. 4 is 2.3 mW. It is to be noted that, in Sample No. 3, a trace of melting was found in some part of the area that had been irradiated with the DC laser beam at the erasing power level of higher than higher than 2.7 mW, and the trace of melting was found in substantially entire area that had been irradiated with the DC laser beam at the erasing power level of 3.5 mW.

Next, the present invention is described in further detail by referring to embodiments.

The medium of the present invention should be designed such that the DC erasability upon DC erasing operation at a power level not less than the optimal erasing power level and not exceeding the recording power level is not lower than the maximum erasability minus 10 dB. An adequate selection of the composition of the phase change recording layer is thus required. Thermal design of the medium is also important in the medium of the present invention since the medium is erased at a high power and self-erasing should be reduced. To be more specific, the medium preferably has a rapid cooling structure wherein the heat is rapidly dissipated from the recording layer during the recording.

## Structures of in FIGS. 5 and 6

## Supporting substrate 20

The supporting substrate 20 is provided to maintain rigidity for the medium. The supporting substrate 20 usually has a thickness of about 0.2 to 1.2 mm, preferably 0.4 to 1.2 mm, and may be transparent or opaque. The supporting substrate 20 may be formed of any resin like conventional optical recording media although glass, metal, or ceramic material may also be used. Grooves (guide channels) 21 commonly provided in optical recording media can be formed by forming grooves in the supporting substrate 20 and transferring them to the respective overlying layers, as in the illustrated embodiment. The grooves 21 are regions located closer to the incident side of recording/reading laser beam, with regions interposed between adjacent grooves serving as lands 22.

Reflective layer 5

The reflective layer may be formed of any material which is usually selected from simple substances of metals and metalloids such as Al, Au, Ag, Pt, Cu, Ni, Cr, Ti and Si and alloys containing at least one such metal or metalloid. When the medium should have a rapid cooling structure for reducing the self-erasing, it is preferred to form the reflective layer from a material having a high thermal conductivity. Preferred high thermal conductivity materials are Ag and Al. Since Ag or Al alone, however, is less resistant to corrosion, it is recommended to add another element to Ag or Al for improving corrosion resistance. In the medium of the structure shown in FIG. 5, the reflective layer tends to have an increased surface roughness on the laser beam incident side due to crystal growth during its formation. The increased surface roughness can lead to an increased read noise. It is thus preferred to reduce the grain size of the reflective layer. In this regard too, it is recommended to add another element to Ag or Al rather than the use of Ag or Al alone, so that the reflective layer may be formed to a smaller grain size and as an amorphous layer.

Since the addition of another element often entails a decline of thermal conductivity, it is preferred to use Ag having a higher thermal conductivity as a main element for avoiding such inconvenience. The preferred auxiliary element to be added to Ag is at least one selected from among Mg, Pd, Ce, Cu, Ge, La, S, Sb, Si, Te, and Zr. One or more of these auxiliary elements may be used. The content of auxiliary elements in the reflective layer is preferably 0.05 to 2.0 atom %, more preferably 0.2 to 1.0 atom % for each element, and preferably 0.2 to 5 atom %, more preferably 0.5 to 3 atom % in total. Too small contents of auxiliary elements fail to exert the desired effects. Too large contents of auxiliary elements would result in a decline of thermal conductivity.

It is noted that the thermal conductivity of the reflective layer decreases as the grain size becomes smaller. If the reflective layer is amorphous, it is difficult to secure a sufficient cooling rate upon recording. Therefore, once the reflective layer is formed as an amorphous layer, heat treatment is preferably carried out for crystallization. The procedure of inducing crystallization of the initially amorphous layer has the advantage that the layer maintains the surface roughness that the amorphous layer has had and the thermal conductivity is increased by crystallization.

When the medium should have a rapid cooling structure to reduce the self-erasing, the reflective layer should preferably has a thermal conductivity $K_R$ of

$K_R \geq 100$ W/mK, and more preferably

$K_R \geq 150$ W/mK.

In the Sample No. 3 having the rapid cooling structure as described above, the reflective layer 5 has a thermal conductivity of 170 W/mK. On the other hand, the reflective layer 5 of Sample No. 1 has a thermal conductivity of 100 W/mK.

The thermal conductivity can be calculated according to Wiedemann-Franz's law from the electric resistance of the reflective layer measured by the four-probe method. No upper limit is imposed on the thermal conductivity of the reflective layer. That is, use may be made of pure silver having the highest thermal conductivity of 250 W/mK among the materials which can be used to form the reflective layer.

The reflective layer preferably has a thickness of 10 to 300 nm. A layer with a thickness below the range may fail to provide a sufficient reflectivity whereas a layer with a thickness above the range achieves little further improvement in reflectivity and is economically disadvantageous. The reflective layer is preferably formed by a vapor deposition technique such as sputtering or evaporation.

First and second dielectric layers 31 and 32

These dielectric layers prevent the recording layer from oxidation and degradation and protect the supporting substrate 20 and light-transmitting substrate 2 by insulating the heat transferred from the recording layer during recording or releasing the heat in the lateral direction. The provision of these dielectric layers improves the degree of modulation. Each of the first and second dielectric layers 31 and 32 may be a laminate of two or more dielectric sublayers having different compositions.

The dielectric materials used in these dielectric layers are preferably compounds containing at least one metal component selected from Si, Ge, Zn, Al, and rare earth elements. The preferred compounds are oxides, nitrides and sulfides while mixtures containing at least two of these compounds are also useful.

To provide a rapid cooling structure for the purpose of reducing the self-erasing, it is preferred that the dielectric layers, especially second dielectric layer 32 be formed of a dielectric material having a high thermal conductivity. Preferred dielectric materials having a high thermal conductivity are mixtures of zinc sulfide and silicon oxide ($ZnS$-$SiO_2$), aluminum nitride, aluminum oxide, silicon nitride and tantalum oxide, with oxides and/or nitrides of aluminum and oxides and/or nitrides of silicon being especially preferred. The $ZnS$-$SiO_2$ mixtures are preferably those containing 30 to 60 mol% of $SiO_2$. Such mixtures with too low $SiO_2$ contents have a low thermal conductivity whereas mixtures with too high $SiO_2$ contents are less adherent to another layer, with a possibility to undergo delamination during long-term storage.

For reducing the self-erasing, the second dielectric layer 32 preferably has a thermal conductivity $K_{2D}$ of

$K_{2D} \geq 1$ W/mK, and more preferably
$K_{2D} \geq 1.5$ W/mK.

No upper limit is imposed on the thermal conductivity of the second dielectric layer 32 although materials which can be used to form the dielectric layers generally have a thermal conductivity of less than about 100 W/mK. In Sample No. 3 having the rapid cooling structure as described above, the $Al_2O_3$ constituting the second dielectric layer 32 has a thermal conductivity of 44 W/mK. On the other hand, in Sample No. 1, the ZnS (50 mol%) - $SiO_2$ (50 mol%) constituting the second dielectric layer 32 has a thermal conductivity of 1 W/mK.

It is noted that the thermal conductivity of the dielectric layer as used herein is not a measurement in the thin film state, but a measurement of a bulk material. In the embodiment wherein the second dielectric layer 32 is a laminate of two or more dielectric sublayers, the second dielectric layer 32 as a whole may have a thermal conductivity of at least 1 W/mK. It is desirable that all the sublayers of the second dielectric layer 32 have a thermal conductivity of at least 1 W/mK.

Preferably the thermal conductivity $K_R$ of the reflective layer is correlated to the thermal conductivity $K_{2D}$ of the second dielectric layer 32 so as to satisfy the relationship:

$$K_R \geq -1.6K_{2D} + 166.$$

This correlation of $K_R$ to $K_{2D}$ ensures that the recording layer is rapidly cooled.

To construct the medium as a rapid cooling structure for the reduction of self-erasing, it is preferred that the first dielectric layer 31 be a laminate of two or more dielectric sublayers as shown in FIG. 5. In the embodiment illustrated in FIG. 5, the first dielectric layer 31 consists of a dielectric sublayer 31C disposed close to the recording layer 4 and another dielectric sublayer 31D disposed remote from the recording layer 4. In the FIG. 5 embodiment, the dielectric sublayer 31C has a thermal conductivity $K_C$, and the other dielectric sublayer 31D has a thermal conductivity $K_D$. In order that the medium be a rapid cooling structure, it is preferred that the dielectric sublayers have such thermal conductivities as to satisfy

$K_C < K_D$, and more preferably
$1.5 \leq K_D/K_C$.

Greater $K_D/K_C$ ratios achieve greater quenching effects. No upper limit is imposed on $K_D/K_C$. Since an upper limit is imposed on the thermal conductivity of materials which can be used to form the dielectric layers as mentioned above, $K_D/K_C$ is also restricted by such limits. Usually $K_D/K_C$ does not exceed 180. To achieve satisfactory quenching effects, it is preferred that $K_C$ be less than 1 W/mK, and $K_D$ be at least 1 W/mK, especially at least 1.5 W/mK. Although no lower limit is imposed on $K_C$, the materials which can be used to form the dielectric layers usually have a thermal conductivity of more than about 0.1 W/mK.

It is to be noted that, in the Sample No.3 having the rapid cooling structure as described above, the ZnS (80 mol%) - $SiO_2$ (20 mol%) constituting the dielectric sublayer 31C has a thermal conductivity of 0.6 W/mK, and the $Al_2O_3$ constituting the dielectric sublayer 31D has a thermal conductivity of 44 W/mK. On the other hand, the first dielectric layer 31 of the Sample No. 4 having the slow cooling structure as described above has a monolayer structure comprising the ZnS (80 mol%) - $SiO_2$ (20 mol%) having a thermal conductivity of 0.6 W/mK.

The thickness of each dielectric sublayer may be determined as appropriate so as to provide the desired medium reflectivity, depending on the optical constants of the material of which the sublayer is formed. To achieve satisfactory quenching effects, the dielectric sublayer 31C has a thickness $t_C$ and the other dielectric sublayer 31D has a thickness $t_D$ in the range of

$5$ nm $\leq t_C \leq 60$ nm, and
$30$ nm $\leq t_D$.

Although no upper limit is imposed on $t_D$, the first dielectric layer 31 should preferably have a total thickness within a specific range to be described later.

Constitution of the first dielectric layer 31 with a multilayer structure as described above, and selection of the thermal conductivities of the reflective layer 5 and the second dielectric layer 32 in the ranges as described above are particularly important when the laser beam spot has a high energy density and the self-erase phenomenon is likely to take place. To be more specific, such structure and such thermal conductivity are particularly effective, when the laser beam used in the overwriting has a wavelength $\lambda$ and the objective lens of the beam irradiating optical system has a numerical aperture NA, and the relation:

$\lambda/NA \leq 680$ nm, and in particular,
$\lambda/NA \leq 630$ nm is met.

Rapid cooling becomes possible when the two dielectric sublayers of the first dielectric layer have thermal conductivities within the above-defined relationship, probably because the heat transfer to be described below takes place. In a prior art structure including a first dielectric layer 31 having a relatively low thermal conductivity, heat release to the side of the high thermal conductivity reflective layer 5 becomes predominant. By contrast, when the first dielectric layer 31 is of the multilayer structure, a considerable amount of heat release takes place on the side of the first dielectric layer 31 so that the recording layer may be more rapidly cooled. More specifically, the heat generated in the recording layer 4 upon recording is initially transferred to the dielectric sublayer 31C. Since the dielectric sublayer 31C has a low thermal conductivity, the heat having reached the sublayer 31C does not spread in the in-plane direction thereof, but transfer to the other dielectric sublayer 31D disposed vertically adjacent thereto. Since the other dielectric sublayer 31D has a high thermal conductivity, the heat having reached the sublayer 31D quickly diffuses in the in-plane direction thereof. In this way, the heat generated in the recording layer 4 is spread with difficulty in the plane of the dielectric sublayer 31C adjoining the recording layer 4 and quickly diffused within the other dielectric sublayer 31D remote from the recording layer 4. This mechanism ensures rapid cooling upon recording.

In order that the recording layer 4 be rapidly cooled, it is desired that the one dielectric sublayer 31C be disposed contiguous to the recording layer 4 as illustrated in FIG. 5. However, an intervening layer may be disposed therebetween if desired. For example, in the event that the heat during recording causes some elements from the dielectric sublayer 31C to be diffused into the recording layer 4 whereby the recording layer 4 can be degraded, a further dielectric sublayer serving as a barrier layer may be disposed between the dielectric sublayer 31C and the recording layer 4. If the thermal conductivity of the barrier layer is approximate to that of the dielectric sublayer 31C, the barrier layer is regarded a part of the dielectric sublayer 31C, and the total thickness of the dielectric sublayer 31C and the barrier layer may fall within the above-described permissible range of thickness $t_c$. If the thermal conductivity of the barrier layer is higher than that of the dielectric sublayer 31C, say, higher than about 1 W/mK, the barrier layer should preferably have a thickness of less than about 20 nm. If the barrier layer is too thick in this situation, the rapid cooling effects can be exacerbated.

Also, to acquire optical enhancement effects, for example, one or both of the dielectric sublayers 31C and 31D may be constructed of a plurality of laminas. In this embodiment, the thermal conductivity $K_C$ of the dielectric sublayer 31C as a whole and the thermal conductivity $K_D$ of the dielectric sublayer 31D as a whole may have the above-described relationship. More preferably, all the plural laminas constituting the dielectric sublayer 31C and all the plural laminas constituting the dielectric sublayer 31D satisfy the above-described relationship.

The thicknesses of the first and second dielectric layers may be determined as appropriate so as to provide satisfactory protective effects and modulation improving effects. Usually, the first dielectric layer 31 preferably has a thickness of 30 to 300 nm, more preferably 50 to 250 nm, and the second dielectric layer 32 preferably has a thickness of 2 to 50 nm. To provide a rapid cooling structure, the second dielectric layer 32 should more preferably have a thickness of up to 30 nm, most preferably up to 25 nm.

The dielectric layers are preferably formed by sputtering.

Recording layer 4

The composition of the recording layer should be selected so that the erasability will not become significantly reduced with the increase in the level of the erasing power, namely, so that the composition selected allows melt erasure. Accordingly, the recording layer may preferably have a composition containing Sb and Te as its main components. In the case of a recording layer having a composition near $Ge_2Sb_2Te_5$ (atomic ratio), for example, the amorphous recorded marks will not be crystallized but will resume their amorphous state when they are irradiated with a DC laser beam of high power level.

The recording layer solely comprising Sb and Te exhibits low crystallization temperature of about 130°C and insufficient storage reliability, and addition of other elements is preferable for increasing the crystallization temperature. More specifically, the recording layer is preferably the one represented by an atomic ratio composition:

$$(Sb_xTe_{1-x})_{1-y}M_y \qquad (I)$$

wherein x and y are such that
    $0.5 \leq x \leq 0.9$, and
    $0.01 \leq y \leq 0.2$.
The x representing the content of the Sb is preferably within the above-specified range since an excessively small x results in an excessively low crystallization speed, and hence, difficulty in initializing the recording layer as well as reduced reflectivity in the crystalline area in the recording layer, and hence, reduced read output. An excessively small x also results in the recording difficulty. On the other hand, an excessively large x results reduced read output due to reduced difference in the reflectivity between the crystalline state and the amorphous state.

The element M is not particularly limited, while it is preferably at least one member selected from In, Ag, Au, Bi, Se, Al, P, Ge, H, Si, C, V, W, Ta, Zn, Ti, Sn, Pb, Pd, and a rare earth element (Sc, Y, and a lanthanoid), and more preferably at least one member selected from a rare earth element, Ag, In, and Ge in view of remarkably high effect of improving storage reliability. They representing the content of the element M is preferably within the above-specified range since an excessively small y results an insufficient effect of improving the storage reliability while an excessively large y result in reduced crystallization speed or reduced read output.

The recording layer preferably has a thickness of more than 4 nm to 50 nm, more preferably from 5 to 30 nm. With too thin a recording layer, the growth of a crystalline phase may be retarded and crystallization may become difficult. When the recording layer is too thick, the recording layer may have a large thermal capacity, resulting in difficult recording and a low read output.

The recording layer is preferably formed by sputtering.

It is to be noted that the recording layer is not limited in the present invention for its structure. The present invention is also applicable to the medium having a recording layer of multilayer structure as described in Japanese Patent Application Laid Open Nos. 8-221814 and 10-226173.

Light-transmitting substrate 2

The light-transmitting substrate 2 has a sufficient transparency to transmit recording/reading beam therethrough. A resin or glass plate having a thickness approximate to the supporting substrate 20 may be used as the light-transmitting substrate 2. It is noted that since the invention is advantageous especially when high density recording is carried out, the light-transmitting substrate 2 is preferably made thin in order to achieve a high recording density by virtue of the increased NA of the recording/reading light optical system. In this regard, the light-transmitting substrate 2 should preferably have a thickness in the range of 30 to 300 μm. If the light-transmitting substrate 2 is too thin, dust depositing on the light-transmitting substrate surface can have a substantial optical influence. If the light-transmitting substrate 2 is too thick, on the other hand, it may become difficult to achieve a high recording density by virtue of the increased NA (numerical aperture).

A thin light-transmitting substrate 2 can be formed, for example, by applying a light-transmitting sheet of transparent resin to the first dielectric layer 31 with the aid of adhesive or tackifier, with the sheet serving as the light-transmitting substrate. Alternatively, a transparent resin layer is formed directly on the first dielectric layer 31 by a coating technique, with the resin layer serving as the light-transmitting substrate. Since the recording/reading beam enters the medium of the present invention through the light-transmitting substrate 2, the light-transmitting substrate should preferably have high optical homogeneity.

In the invention, the lands and/or grooves may be utilized as recording tracks.

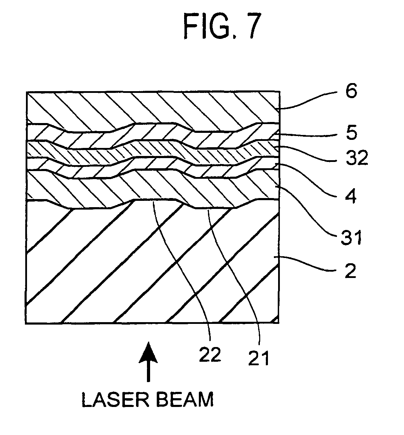

Structure of in FIG. 7

The optical recording medium illustrated in FIG. 7 includes on a light-transmitting substrate 2, and a first dielectric layer 31, a recording layer 4, a second dielectric layer 32, a reflective layer 5, and a protective layer 6 disposed on the light-transmitting substrate 2 in this order. The laser beam for recording and reading enters the medium through the light-transmitting substrate 2.

The light-transmitting substrate 2 in FIG. 7 may be the same as the supporting substrate 20 in FIG. 5 as long as it is light transmissive.

The protective layer 6 is provided for improving mar resistance and corrosion resistance. The protective layer may be formed of various organic materials, preferably a radiation-curable compound or a composition containing such a compound, which has been cured by exposure to radiation such as electron beams or UV light. The protective layer is usually about 0.1 μm to about 100 μm thick. It may be formed by conventional techniques including spin coating, gravure coating, spray coating or dipping.

The remaining layers may be the same as those used in the embodiments illustrated in FIG. 5 or 6.

INDUSTRIAL APPLICABILITY

The present invention has enabled to improve overwrite shelf property of the phase change optical recording medium.

**Claims**

1. An optical recording medium having a phase change recording layer wherein amorphous recorded marks are to be formed, wherein overwriting is conducted by irradiating a laser beam whose intensity is modulated to have at least recording power level and erasing power level; wherein

    when the power level at which maximum erasability is achieved in DC erasing operation to crystallize the amorphous recorded marks by DC laser beam irradiation is designated an optimal erasing power level,

    difference between the DC erasability upon DC laser beam irradiation at a power level not less than said optimal erasing power level and not exceeding the recording power level in the overwriting and said maximum erasability is less than 10 dB.

2. The optical recording medium according to claim 1, wherein the recording layer is represented by an atomic ratio composition:

$$(Sb_xTe_{1-x})_{1-y}M_y \qquad (I)$$

    wherein x and y are such that
        $0.5 \leq x \leq 0.9$, and
        $0.01 \leq y \leq 0.2$.
    when M represents an element which is not Sb or Te.

3. A method for overwriting the optical recording medium according to claim 1 or 2, wherein

when the minimum value of power level at which erasability of at least 32 dB is achieved in the DC erasing operation is designated $Pe_{MIN}$, erasing power level in the overwriting is set at 1.0 to 2.5 folds of $Pe_{MIN}$.

# FIG. 1

SAMPLE No. 1

—◆— INITIAL ERASABILITY —□— ERASABILITY AFTER STORAGE

# FIG. 2

SAMPLE No. 2

—◆— INITIAL ERASABILITY —□— ERASABILITY AFTER STORAGE

# FIG. 3

●— SAMPLE No.3: RAPID COOLING STRUCTURE
··○·· SAMPLE No.4: SLOW COOLING STRUCTURE

# FIG. 4

SAMPLE No. 3: RAPID COOLING STRUCTURE

◆— INITIAL ERASABILITY —□— ERASABILITY AFTER STORAGE

# FIG. 5

LASER BEAM

# FIG. 6

LASER BEAM

## FIG. 7

LASER BEAM

EP 1 453 042 A1

**INTERNATIONAL SEARCH REPORT**

International application No.

PCT/JP02/12297

| A. CLASSIFICATION OF SUBJECT MATTER |
|---|
| Int.Cl$^7$ G11B7/0055 |

According to International Patent Classification (IPC) or to both national classification and IPC

**B. FIELDS SEARCHED**

Minimum documentation searched (classification system followed by classification symbols)
Int.Cl$^7$ G11B7/00-7/013, G11B7/12-7/22, 7/30

Documentation searched other than minimum documentation to the extent that such documents are included in the fields searched

| | | | |
|---|---|---|---|
| Jitsuyo Shinan Koho | 1922-1996 | Toroku Jitsuyo Shinan Koho | 1994-2003 |
| Kokai Jitsuyo Shinan Koho | 1971-2003 | Jitsuyo Shinan Toroku Koho | 1996-2003 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X<br>Y | JP 08-235585 A (NEC Corp.),<br>13 September, 1996 (13.09.96),<br>Par. No. [0041]<br>(Family: none) | 1,3<br>2 |
| X<br>Y | JP 10-188286 A (Sony Corp.),<br>21 July, 1998 (21.07.98),<br>Par. No. [0046]<br>(Family: none) | 1,3<br>2 |
| X<br>Y | JP 10-134389 A (Ricoh Co., Ltd.),<br>22 May, 1998 (22.05.98),<br>Par. No. [0045]<br>(Family: none) | 1,3<br>2 |

☒ Further documents are listed in the continuation of Box C.　☐ See patent family annex.

| | |
|---|---|
| \* Special categories of cited documents:<br>"A" document defining the general state of the art which is not considered to be of particular relevance<br>"E" earlier document but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |
| Date of the actual completion of the international search<br>28 February, 2003 (28.02.03) | Date of mailing of the international search report<br>11 March, 2003 (11.03.03) |
| Name and mailing address of the ISA/<br>Japanese Patent Office | Authorized officer |
| Facsimile No. | Telephone No. |

Form PCT/ISA/210 (second sheet) (July 1998)

16

**INTERNATIONAL SEARCH REPORT**

| International application No. |
|---|
| PCT/JP02/12297 |

C (Continuation).   DOCUMENTS CONSIDERED TO BE RELEVANT

| Category* | Citation of document, with indication, where appropriate, of the relevant passages | Relevant to claim No. |
|---|---|---|
| Y | JP 07-266704 A  (TDK Corp.),<br>17 October, 1995 (17.10.95),<br>Par. No. [0069]<br>& US 5523140 A | 2 |
| Y | JP 08-007333 A  (TDK Corp.),<br>12 January, 1996 (12.01.96),<br>Par. No. [0041]<br>& US 5569517 A | 2 |

Form PCT/ISA/210 (continuation of second sheet) (July 1998)